# EUROPEAN PATENT APPLICATION

(11) **EP 2 592 837 A1**
(43) Date of publication of application: **15.05.2013**
(21) Application number: 11188618.0
(22) Date of filing: 10.11.2011
(51) Int. Cl.: H04N 9/04, H04N 9/09, H04N 5/225

(54) **Apparatus and associated method for forming color camera image**

(71) Applicant: Research In Motion Limited, Waterloo, ON N2L 3W8 (CA)
(72) Inventor: Grandin, Thomas, Waterloo, Ontario N2L 3W8 (CA)
(74) Representative: Bryn-Jacobsen, Caelia

(57) **Abstract**

An apparatus, and an associated method, for creating a color image at a camera module. A plurality of lenses is positioned to receive incident light energy of a target. An optical filter is associated with one or more of the lenses. Different filters exhibit different optical characteristics. Incident light is filtered and then focused by the lenses towards respective focal points of the lenses. A monochrome sensor element senses light intensity of focused light, focused by the lenses. Sensed indications are utilized to form a color image.

## Description

The present disclosure relates generally to a manner by which to record a color image at a camera element of a device having camera functionality, such as a camera phone. More particularly, the present disclosure relates to an apparatus, and an associated method, by which to form a color image using a monochrome sensor that is provided with optically-filtered light, filtered by a plurality of optical filters.

Camera lenses of reduced complexity and exhibiting smaller focal lengths permit the camera element to be of increased tolerances and a smaller thickness.

### Background

Recent years have been witness to significant advancements in technology. Advancements in communication, processing, and mass-storage technologies are, for instance, exemplary of such advancements. The advancements have permitted the development of new device and services that make use of the advancements. Communication-related services, for instance, are readily available to many that until recently were wholly unavailable or were available only at very high costs.

Cellular-communication-system networks, for instance, have been installed throughout large portions of the populated areas of the world. Cellular communication systems are utilized by many and provide an affordable manner by which to communicate.

Voice communication services are provided in a cellular communication system. New-generation, cellular communication systems also provide for data-intensive communication services. Large-sized data files are readily and quickly communicated by way of a new-generation, cellular communication system.

The user accesses and communicates by way of the network of a cellular communication system through use of a portable, wireless device. A portable, wireless device is typically of a size and weight that permits the wireless device to be easily hand-carried. Many wireless devices are of dimensions and weights permitting a user to carry the wireless device in a shirt pocket or purse when not used.

A wireless device sometimes includes additional functionality to perform additional communication and other services in addition to functionality that provides for communications with the network part of the communication system. A wireless device that includes additional functionality is sometimes referred to as being a multi-functional device. A functionality provided to a wireless device is sometimes a standalone functionality, i.e., a functionality that is communication-independent.

For instance, camera functionality is sometimes provided to a wireless device. The camera functionality is typically provided by use of a camera module or camera element embodied at the wireless device. The camera functionality provides for the recordation of an image or sequence of images. A recorded image is displayable at an image display element of the device or is communicated elsewhere for storage or display at a remote location.

Due to the need to maintain the portability of the wireless device, the dimensions of a camera module or element are constrained. Efforts are made to provide the functionality of the camera module while also minimizing the physical dimensions of the camera module. Additionally, a camera module is relatively complex, both respect to the parts as well as assembly operations to assemble the camera module.

Conventional camera modules utilize a camera lens and a color matrix sensor. The color matrix sensor typically forms a "bayer" filter, which is formed of a plurality of pixels arranged in an array. The pixels are typically comprised of CMOS, or other, sensors whose characteristics change responsive to light energy incident thereon. The camera lens is typically optimized in terms of chromaticity and the use of a color matrix implemented as a bayer filter can limit the camera sensitivity.

Efforts to provide a camera module of improved operability, improved manufacturing tolerance, and decreased cost therefore have various challenges to overcome.

Improvements relating to any of these aspects of a camera module would be advantageous. However, due to the constraints imposed upon camera modules and the complexity of such modules, efforts have not always been successful.

### Brief Description of the Drawings

Figure 1 illustrates a functional block diagram of a communication system in which a device having an implementation of the present disclosure forms a portion.

Figure 2 illustrates a representation of a portion of the camera module of an implementation of the present disclosure.

Figure 3 illustrates a functional block diagram of a wireless device of an implementation of the present disclosure.

Figure 4 illustrates a process diagram representative of the process of operation of an implementation of the present disclosure.

### Detailed Description

The present disclosure, accordingly, advantageously provides an apparatus and an associated method by which to record a color image at a camera element of a device having camera functionality, such as a camera phone.

Through operation of an implementation of the present disclosure, a manner is provided by which to form a color image using a monochrome sensor that is provided with optically-filtered light, filtered by a plurality of optical filters.

In one aspect of the present disclosure, a camera lens of reduced complexity is provided. The camera lenses exhibits smaller focal lengths. As the colored light incident on the camera lenses is already optically filtered, each lens does not need to compensate for color aberrations, so the lens can be of lowered complexity, and reduced dimensional requirements.

In another aspect of the present disclosure, a plurality of lenses is utilized. The lenses are comprised, for instance, of wafer lenses. Each lens exhibits a focal length. Focal lengths of the different lenses are, in different implementations, substantially similar, within a range of focal lengths, or differing focal lengths. Individual ones of the lenses are, e.g., optimized depending upon associated filters and differ with one another based upon the optimization. The focal lengths of the camera lenses substantially correspond with one another.

In another aspect of the present disclosure, the camera lenses are arranged and supported, such as in a row or array, so that incident light energy is incident upon all of the camera lenses. The incident light energy is representative of a target scene.

In another aspect of the present disclosure, the camera lenses are arranged in a substantially similar, e.g., planar, orientation. That is to say, the camera lenses are positioned to be similarly oriented and are positioned to receive substantially identical incident light energy and to focus the incident light energy in a similar manner. The incident light, incident upon each of the lenses of the plurality of lenses, is focused towards focal points of the respective lenses.

In another aspect of the present disclosure, a sensor is positioned beyond the lenses, positioned to sense focused light energy by the individual ones of the lenses. Through appropriate positioning and orientation of the lenses, the sensor is positionable to sense focused light energy, focused by each of the camera lenses. The sensor senses, e.g., the intensity of the light energy incident thereon.

In another aspect of the present disclosure, the sensor is positioned to extend in a planar direction to position a sensor surface of the sensor at selected distances beyond each of the lenses. The sensor is positioned, for instance close to or at the focal points of the lenses. By positioning the sensor to extend in the planar direction with the lenses set apart by common distances, the sensor senses similar light intensities of focused light focused by the individual ones of the lenses.

In another aspect of the present disclosure, the sensor comprises a monochrome sensor sensitive to the whole visible light range of spectrum having CMOS, or other, sensors that sense light energy. A monochrome light sensor senses light energy of any color, in contrast to conventional color sensors in which individual pixels or sensors sense color-specific light energy.

In another aspect of the present disclosure, the sensor is positioned such that focused light energy is incident at differing location areas at a sensor surface at which the lenses are positioned. Thus each lens creates a different image of the scene on the sensor. The location areas are, for instance substantially or completely non-overlapping.

In one implementation, the focal lengths of the lenses are similar and the focal points of the respective lenses are substantially the same distance from each of the respective lenses of the plurality. That is to say, by positioning each of the lenses at a common height and orientation, the incident light energy incident at each of the lenses is directed towards focal points at corresponding distances beyond the lenses so that each lens creates an image of the scene on a single or different image planes. In another implementation, each lens is positioned at a distance from the sensor to create a sharp image at an object plane, with different ones of the lenses configured or positioned to create sharp images at different object planes. Positioning of lenses to create the sharp images at the different object planes increases the resultant depth of field that can be acquired.

In another aspect of the present disclosure, optical filters are positioned in line with the lenses. Different ones of the lenses are paired with filters of different optical characteristics. The optical filters are, for instance, positioned between the incident light source and the lenses. The light energy focused by the lenses comprises optically-filtered light energy. By utilizing different optical filters with different ones of the lenses, the focused light energy sensed by sensor is of different characteristics, e.g., different intensity characteristics, depending upon the characteristics of the respective optical filters. The optical filters may also be positioned between the lenses and the sensor. Alternatively, the filters and the lenses form a single element, viz., the filters are embodied in the lenses.

In another aspect of the present disclosure, an image former is provided that forms a color camera image based upon the sensed indications sensed at the monochrome sensor. The image former is, in one implementation, implemented as a camera ISP. As the optical filtering of the light energy alters the characteristics of the light energy, the resultant, focused light energy detected by sensor differs, and differences between the light energy sensed at the different location areas, associated with different ones of the lens-filter pairs, permits determination of color characteristics of the incident light energy to be ascertained and used to form the color, camera image.

Through use of the multiple lenses, each providing focused, light energy that is optically filtered by an optical filter associated with the lens permits lenses exhibiting reduced focal lengths to be utilized as well as permitting lenses of lower chromaticity performance to be utilized. Additionally, more complex, color filtering than that permitted through use of color sensors, such as color sensors that utilize bayer filtering, is possible. Camera modules of lessened complexity and improved tolerances and sensitivities are provided.

In these and other aspects, therefore, an apparatus and an associated method is provided for a device that has camera functionality. A plurality of lenses is provided in which each lens of the plurality is configured to focus incident light energy. At least one optical filter of a filter set is provided. The at least one optical filter is associated with a lens of the plurality of lenses. Each optical filter of the set is of a selected color or waveband characteristic. A monochrome sensor is configured to sense color-filtered, focused light energy, focused by the lenses, filtered by the at least one filter, and incident on the sensor.

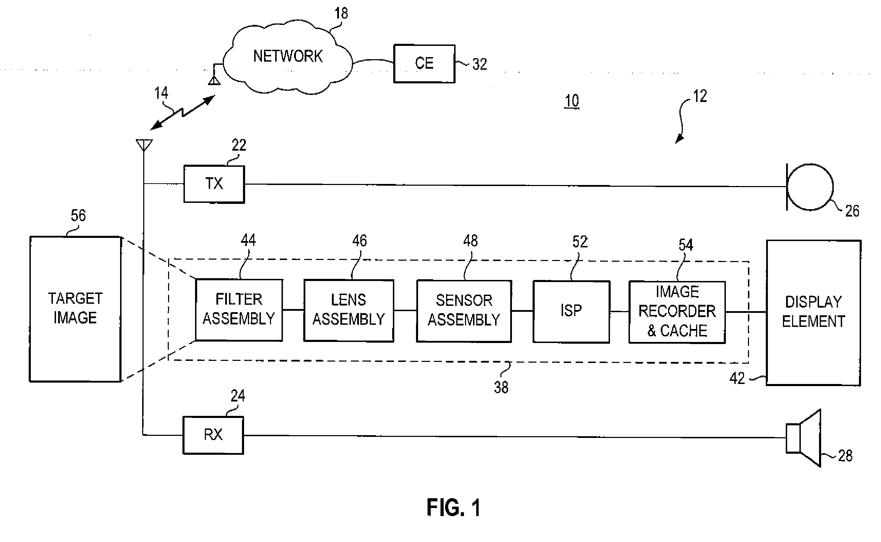

Turning to Figure 1, a communication system 10 provides for communications with, and between, communication devices. In the exemplary illustration of Figure 1, the communication system forms a radio communication system in which radio channels are defined and upon which information is communicated pursuant to a communication service. Radio channels are defined upon a portion of the electromagnetic spectrum, typically allocated by a regulatory authority. Communication by way of radio channels obviates the need for a wireline connection along an entire communication path extending between communication stations that are parties to a communication session in which information is exchanged. The communication system, when implemented as a radio communication system, is representative of any of various communication systems, such as a cellular communication system, a WiFi communication system, or other system operable pursuant to other operating protocols. More generally, the communication system 10 is representative of any of various communication systems, including wireline communication systems, in which communications are effectuated between, and with, communication stations.

In the illustrated implementation, a device 12 forms a wireless device that communicates by way of radio channels with a communication network 18. In a wireline communication system, the device 12 is correspondingly configured to communicate therein. The device 12 is also representative of a standalone device that operates irrespective of capability to form a communication connection with another device.

When configured to be operable in a radio communication system, the device 12 includes transceiver circuitry including a transmitter (Tx) 22 and a receiver (Rx) 24. A microphone 26, or other transducer, coupled to the transmitter 22, and a speaker 28, or other transducer, is coupled to the receiver 24. Information transmitted by the transmitter 22, such as information transduced into electrical form by the microphone 26, is communicated by way of radio channels 14 and delivered to the communication network 18. The information is routed to the communication network, here represented by a communication endpoint (CE) node 32. Information originated at the network, such as at the communication endpoint 32, for delivery to the device 12, is routed through the communication network 18, communicated upon radio channels 14, and delivered to the device 12 and detected at the receiver 24 thereof.

The device 12 includes camera functionality provided by a camera module 38. The camera module provides for recording of images. The images are displayable at a display element 42 of a device user interface. An image, once recorded, can also be communicated by the transceiver circuitry to a remote location for storage and display.

A camera module 38 is formed of functional elements that are implemented in any desired manner including, for instance, hardware elements, firmware elements, program codes executable by processing circuitry, and combinations thereof.

Here, the camera module includes a lens assembly 46, a sensor assembly 48, and an ISP (Image Signal Processor) 52 and an image recorder and cache 54. In the exemplary implementation, the optical filter assembly is positioned to filter incident light energy prior to focusing by the lens assembly 46. In an alternate implementation, the optical filter assembly is positioned to optically filter light energy subsequent to focusing by the lens assembly. In another alternate implementation, the filter and lens assemblies are formed of a common element.

The device 12 is positionable such that the lens assembly 46 of the camera module is directed towards a target scene 56. The target scene is any subject whose image is to be recorded during operation of the camera module of the device 12. When properly oriented relative to the target scene, light energy of the target scene is detectable at the camera module, and used to record an image. A user of the device 12 orients the device, e.g., using a screen display displayed at a display element to facilitate proper orientation of the device 12 relative to the target scene 56.

The lens assembly 46 may include a plurality of lenses, each supported to be commonly positioned such that incident light energy of a target scene, when positioned at least a minimum distance from the device 12, is incident at each of the lenses of the plurality of lenses. The lenses are, for instance, arranged in a row or are arranged in an array. For instance, in one implementation, the lens assembly 46 includes four different lenses, the lenses are arranged in a row of four lenses, e.g., in a two-by-two array of lenses.

The filter assembly 44 may be comprised of a plurality of optical filters, with at least one optical filter associated with each lens of the plurality of lenses of the lens assembly 46. In the exemplary implementation, an optical filter of the filter assembly 44 is associated with a corresponding lens of the plurality of lenses of the lens assembly 46. In other implementations, one or more lenses of the plurality of lenses are not associated with a filter of the filter assembly 44 or are associated with a filter that does not filter visible light energy. The optical filters of the filter assembly are, in one implementation, in a fixed association with the lenses of the lens assembly. In another implementation, the filters and filter associations are changeable.

Any of various filter types are used in various implementations. Commonly additive filters, subtractive filters, but more generally any optically, low-pass, high pass, band-pass or band-reject filters, and any combination thereof are selectable as the optical filters. In one implementation, one or more of the lenses is not filtered and instead is used to obtain luminance information, of the whole range of spectrum of the white light focused by the associated lens or lenses. Color information is obtained from color-filtered light energy focused by others of the lenses.

In one implementation, color information is obtained from the use of multiple lens-filter pairs. For example, filters that pass different wavebands or a full range of visible wavelengths are combined with different wavebands or a full-range of infra-red wavelengths so that visible and infrared-passed information can be combined. That is to say, the infrared information is combined with the visible information. A resultant image permits for instance, highlighting of differences between vegetation and man-made objects as chlorophyll found in vegetation emits infrared light energy during a photosynthesis process.

In one implementation, the lenses of the plurality of lenses of the lens assembly 46 exhibit common characteristics and, e.g., each lens of the plurality of lenses exhibits a common focal length. Because each lens exhibits the same focal length, the focal point defined by each lens is also the same distance from the associated lens. In another implementation, the characteristics and positioning of the lenses are not as strictly controlled. In this implementation, light energy focused by one of the lenses is used as reference. In another implementation, the distance between each lens of the plurality of lenses and the sensor is selected such that sharp images are formed by different ones of the lenses at different distances therefrom. The sharp images are formed at different object planes and the resultant camera depth of field is increased.

The sensor assembly 48 comprises a sensor element including an array of sensors or pixels, arranged in an array. The sensor element of the sensor assembly is positioned to receive light energy focused by the lenses of the lens assembly 46. The sensor element is positioned, e.g., such that the sensors or pixels of the sensor element are positioned substantially at, or close to, the focal points of the lenses of the plurality of lenses of the lens assembly 46. As mentioned previously, the focal lengths may be dissimilar or the lenses may be positioned dissimilarly. The pixels or sensors of the sensor element are of characteristics dependent upon the light energy incident thereon. Additionally, in the exemplary implementation, the sensor assembly 48 comprises a monochrome, i.e., a black-and-white, sensor assembly in which the sensors of the sensor element are configured to sense light intensities rather than light intensity of particular wavelength characteristics sensed by colorsensitive sensors or pixels of a color sensor element.

Each of the plurality of, i.e., multiplicity of, lenses of the lens assembly incident at different ones of the lenses is focused towards respective focal points of the respective lenses. The focused light energy is incident at different location areas of the sensor element of the sensor assembly. The location areas in the exemplary implementation are substantially non-overlapping with one another. Indications of the sensed light energy at different ones of the location areas are provided to the image signal processor 52. An optical image created by each of the lenses is provided to the image signal processor 52. Once formed, the image is recorded and stored at the image recorder and cache 54. A recorded image can be communicated elsewhere by the transmitter 22.

Because different optical filters are associated with different lenses of the lens assembly, the characteristics of the light energy of the target scene 56 incident at individual ones of the lenses are dependent upon the characteristics of the optical filters associated with the individual ones of the lenses. As a result, the characteristics of the light energy incident at the different location areas of the sensor element of the sensor assembly 48 are correspondingly dependent upon the characteristics of the different optical filters. For example, in an exemplary implementation, noted above, one lens provides focused, white light, and other lenses provide focused, color-filtered light. The white light provides luminance information, and the color-filtered light provides color information. Differences between the light incident at the different location areas is due to the characteristics of the different ones of the optical filters.

Indications, which are provided to the ISP 52, are used at the ISP to create a color image, that is, a computed image, even though the sensor element of the sensor assembly comprises a monochrome sensor. The optical images created by each of the lenses are combined to form the computer image. Once formed, the image is displayable at the display element 42, stored locally at a storage element (not shown) or provided to the transmitter 22 for communication elsewhere for storage or display.

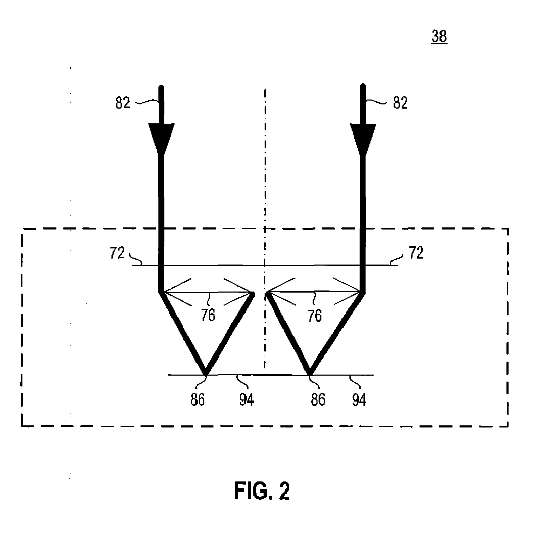

Figure 2 illustrates a light path of light energy of a target scene incident at the camera module 38, which forms a portion of the device 12 shown in Figure 1.

The camera module includes a plurality of optical filters 72 and a plurality of lenses 76. The filters 72 form part of the optical filter assembly 44, shown in Figure 1. The lenses 76 form part of the lens assembly 46, shown in Figure 1. Lines 82 are representative of the incident light energy of the target scene, incident at the camera module. The lines 82 are substantially parallel to one another, representative of a far-field, target scene. Thereby, light energy of substantially-corresponding light characteristics are incident at each of the optical filters 72. Different ones of the optical filters 72 exhibit differing optical filter characteristics to pass or reject light energy of selected characteristics, such as wavelength, or other characteristics. The optical filters are variously band-pass filters or band-reject filters. Each of the optical filters 72 and associated lenses 76 form a filter-lens pair that defines an optical channel. Through selection of optical filters 72 of differing characteristics, the resultant filter-lens pairs define separate channels. That is to say, the multiple filter-lens pairs define optically-separated channels. Each of the filters 72 and each of the lenses 76 form an optical element.

Each lens 76 exhibits lens characteristics, here both of chromaticity performance and focal length, thereby to act upon the incident optically-filtered light and to direct the light towards focal points 86. The sensor element 92 of the sensor assembly 48, shown in Figure 1, is here positioned at, or close to, the focal points 86 and operates to sense intensity of the light energy at location areas 94 proximate to the respective focal points 86. Indications of the sensed light energy are provided to the ISP 52 (shown in Figure 1) and a color image is created even though the sensor element 92 is formed of monochrome sensors.

In one implementation, four filter-lens pairs are utilized. Each filter is of a different optical characteristic. For instance, a first optical filter passes the whole range of visible colors (white light), a second optical filter is of a red filter color, a third optical filter is of a green filter color, and a fourth optical filter is of a blue filter color. In one implementation, passing of white light is accomplished without use of a filter. Once filtered, focused, and sensed at separate location areas of a sensor element, sensed indications are provided to an ISP, and a color image is formed. Any of various other filter combinations can alternately be used. In another example, cyan, magenta, yellow, and white-light filtering is utilized. In another example, deep blue, blue, green, and green-yellow filtering is used. In another example, two white filters and only two colors filtering are used. The color information is calculated from computationally combining: (A) color information provided by color filtering and (B) luminance information provided by white filtering. The filter combination can also be adapted to accurately see some wavelengths, and result to a non-white image. Finally the filter combination can be changeable and left to the choice of the user to create a desired color and infrared association. In another implementation, the filter combination can be changeable and left to the choice of the user to create a desired color and infrared association.

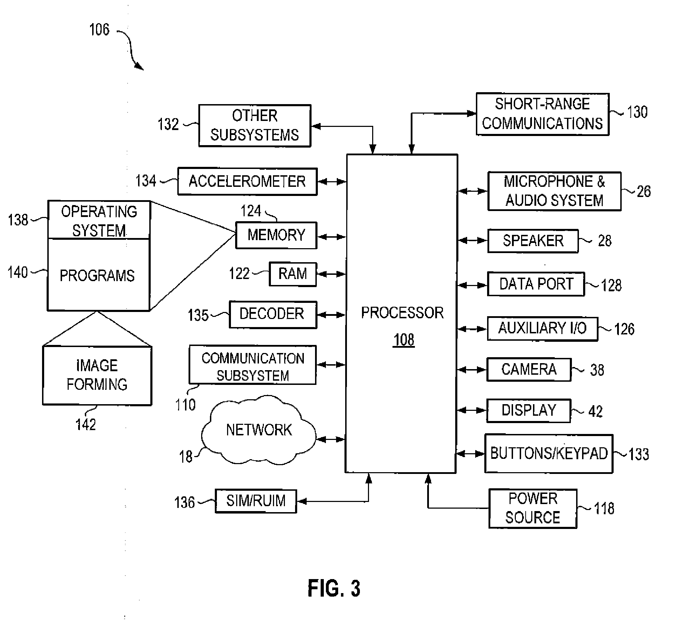

Figure 3 illustrates a representation of an electronic assembly 106 of a wireless device, such as the wireless device 12 shown in Figure 1. The electronic assembly 106 includes multiple components, including a processor 108 that controls overall operation of the wireless device. In various embodiments, functions provided by a wireless device include voice, data, and command communications, which are implemented by a communication subsystem 110. The communication subsystem 110 is used, e.g., to initiate and to support an active voice call or data communication session. The communication subsystem 110 is comprised of any of various combinations of hardware, software, and firmware to perform various designated functions. The software is functionally or conceptually divided into software modules. Software in one module is able to share or to call upon functions of another module.

Data received by a device at which the electronic assembly is implemented can be processed, including decompression and decrypting operations, by a decoder 135. The communication subsystem 110 receives messages from, and sends messages to, the network 18. The communication subsystem 110 facilitates initiation and operation of an active call when the device at which the electronic assembly is implemented is in a real-time, voice communication session. The network 18 is of any various types of networks including, for example, a cellular network, a wireless data network, a wireless voice network, and a network that supports both voice and data communications. The network 18 uses any of a variety of formats, protocols, or standards such as standards including the global system for mobile communications (GSM), code division multiple access (CDMA), wireless Ethernet (Institute of Electrical and Electronics Engineers Standard 802.11), WiFi, and other analogous standards and wireless networking protocols.

A power source 118 provides power to operate or to charge the electronic assembly and is implemented with one or more rechargeable batteries or a port to an external power supply.

The processor 108 interacts with additional components, here including a random access memory (RAM) 122 a memory 124, the display element 42, an auxiliary input/output (ilo) subsystem 126, a data port 128, the speaker 28, the microphone 26, together with an associated audio system, the camera module 38, a short-range communication subsystem 130, and other subsystems 132. A user of a device in which the electronic assembly 106 is implemented is able to enter data and to operate functions of the device with a data input device coupled to the processor 108. The data input device here includes buttons or a keypad 133 or a graphical user interface produced at the display element 42 in which touches and gestures are detected by a touch-sensitive overlay of the display element 42. The processor 108 interacts with the buttons or keypad or with the touch-sensitive overlay of the display element 42 by way of an electronic controller, which is represented by the other subsystem 132. As part of the user interface, information, such as text, characters, symbols, images, icons, and other items that are rendered are displayable at the display element 42. The processor 108 further interacts with an accelerometer 134 that detects a direction of gravitation forces or user-input acceleration forces and with a decoder 135. In various embodiments, the buttons and keypad 132 are used to operate select functions of the electronic assembly.

The electronic assembly 106 further includes a subscriber identity module or removable user identity module (SIM/RUIM) card 136. In an alternate implementation, identification information is programmed elsewhere, such as at the memory 124.

The electronic assembly 106 further includes an operating system 138 and software programs 140 formed of program code. The operating system 138 and the programs 140 are executed by the processor 108 during operation of the electronic assembly. The operating system 138 and the software programs 140 are stored, for example, at a persistent, updatable store, such as the memory 124, as illustrated. Additional applications or programs can be loaded by way of the network 18, the auxiliary i/o subsystem 126, the data port 128, the short-range communication subsystem 130, or any other subsystem 132 that is suitable for transferring program files. The software programs 140 include software modules, here including an image-forming module 142. The module 142 is used to form a color image using indications of focused light energy sensed by the monochrome sensor(s), which forms part of the camera module 38. The software module 142 can call upon various hardware and software resources of the electronic assembly 106 to execute the functionality of the respective modules. Additionally, functions described in the present disclosure are alternately, or additionally, implemented in any of various portions of the electronic assembly 106, whether the portions form software modules or specialized hardware and firmware modules. In many instance, it is possible to implement the same function in more than one portion of the assembly 106.

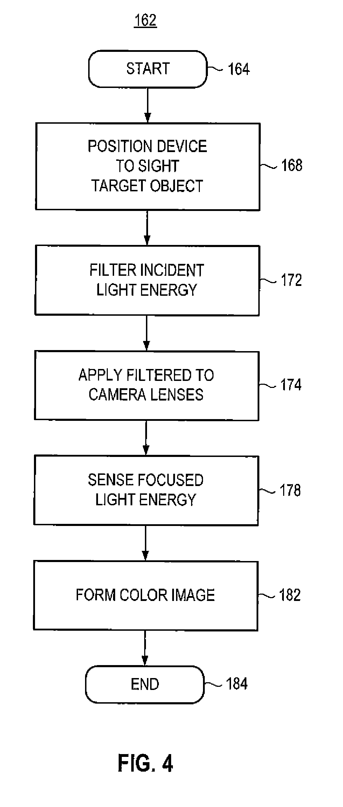

Figure 4 illustrates a process diagram 162 representative of the process of operation of an implementation of the present disclosure. The process represented by the diagram 162 is implemented in conjunction with the instruction and function shown in Figures 1-3. The process facilitates formation of a color image at a device having camera functionality. Subsequent to entry at the start block 164, the device receives incident light from a target object, indicated by the block 168. When so-positioned, and a lens-shutter is opened, light energy is incident at optical filters whereat, and as indicated by the block 172, incident light energy is filtered.

Then, and as indicated by the block 174, the filtered light energy filtered by the separate filters is applied to a plurality of camera lenses, and the lenses focus the optically-filtered light energy towards focal points of the respective lenses. The lenses comprise, for instance, wafer lenses. A sensor element senses, indicated by the block 178, focused light energy, focused by the different ones of the lenses. The sensor element comprises a monochrome sensor element that senses light intensity. The filters are positioned such that focused light energy is incident upon different portions of the sensor element.

Sensed indications are provided to an ISP, or other appropriate device or element, and a color image is formed, as indicated at the block 182. The sensed indications provided by the sensor element to the ISP are monochromatic indications. Differences between sensed indications at the different portions of the sensor element are due to the differences between the light energy sensed at the different portions of the sensor element. The differences are due to the different filters. The ISP utilizes the sensed indications and creates a color image, making use of the known filter characteristics of the separate filters. The process ends at the end block 184.

Thereby, when a camera module includes an implementation of the present disclosure, a camera module of reduced size is possible due to the reduced focal length required of the lenses. Additionally, through appropriate selection of the set of colors forming the optical filters, reduced complexity of the lenses is permitted as lenses of lower chromaticity performance can be used. Additionally, the amount of light that is able to be sensed at the sensor element is improved and more complex color filtering than that conventionally provided by color sensor elements is permitted.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An camera module for a wireless device, said camera module comprising:
a plurality of lenses, each lens of said plurality of lenses configured to focus incident light ;
a plurality of filters, each filter of said plurality of filters arranged to cooperate with one of said plurality of lenses, each of the plurality of filters having a color characteristic; and
a monochrome sensor configured to sense filtered, focused light focused by said plurality of lenses and filtered by said plurality of filters.

2. The camera module of claim 1 wherein each filter of said plurality of filters is optically separated from others of said plurality of filters.

3. The camera module of claim 1 or claim 2 wherein at least one filter of said plurality of filters comprises a band reject filter.

4. The camera module of claim 1 or claim 2 wherein at least one filter of said plurality of filters comprises a band pass filter.

5. The camera module of any one of claims 1-4 wherein said monochrome sensor is configured to sense the filtered, focused light at a number of areas defined on the sensor surface.

6. The camera module of claim 5 wherein the number of areas corresponds in number with the plurality of filters.

7. The camera module of any one of claims 1-5 wherein said plurality of lenses comprises at least four lenses and said plurality of filters comprises at least three optical filters.

8. The camera module of any one of claims 1-7 further comprising a processor configured to form a color image using a sensor signal of the filtered focused light sensed by said monochrome sensor.

9. A method for generating a color image at a wireless device having a camera module, said method comprising:
receiving incident light at a plurality of lenses;
filtering the incident light with a plurality of filters, each filter arranged to receive light from one of the plurality of lenses;
receiving light at a monochrome sensor, focused by each of the plurality of lenses; and
forming the color image using a signal generated by the monochrome sensor.

10. The method of claim 9 wherein said receiving comprises receiving light at a plurality of areas defined at a surface of the monochrome sensor, the plurality of areas corresponding with the plurality of lenses.

11. The method of claim 9 or claim 10 wherein the plurality of lenses comprises at least four camera lenses and wherein the plurality of filters comprises at least three filters.

12. The method of any one of claims 9-11 wherein the plurality of filters comprises a first filter having red filter characteristics.

13. The method of any one of claims 9-11 wherein the plurality of filters comprises a first optical filter having green filter characteristics.

14. The method of any one of claims 9-11 wherein the plurality of filters comprises a first optical filter having blue filter characteristics.

15. The method of any one of claims 9-11 wherein the plurality of filters comprises a first optical filter having white-light filter characteristics.
